# EUROPEAN PATENT APPLICATION

(11) **EP 2 489 961 A1**
(43) Date of publication of application: **22.08.2012**
(21) Application number: 12155643.5
(22) Date of filing: 15.02.2012
(51) Int. Cl.: F24J 2/38, F24J 2/54

(54) **Solar energy conversion system with solar tracker**

(30) Priority: 18.02.2011 IT MI20110241
(71) Applicant: Integra Renewable Energies S.r.l., 20142 Milano (IT)
(72) Inventor: Rasello, Franco, 15020 GABIANO AL (IT); Ferrari, Aleck, 15020 GABIANO AL (IT)
(74) Representative: Modiano, Micaela Nadia

(57) **Abstract**

A solar energy conversion system (1a, 1b, 1c) with solar tracker, comprising a lower footing (2a, 2b, 2c), a supporting frame (3a, 3b, 3c) which is integral with the lower footing (2a, 2b, 2c), at least one panel (4) for accumulating solar energy which is associated with the supporting frame (3a, 3b, 3c) and movable, with respect to the supporting frame (3a, 3b, 3c), by means of a solar tracker (5), about a first rotation axis (6) and about a second rotation axis (7) which is substantially perpendicular to the first rotation axis (6), respectively for the seasonal adjustment and daily adjustment of the orientation of the panel (4) with respect to the sun (8), the solar tracker (5) comprising a T-shaped element (18), which is associated with the panel (4) and with the supporting frame (3a, 3b, 3c), with the head of the T-shaped element (18) oriented substantially parallel to the first rotation axis (6) and with the stem of the T-shaped element (18) oriented substantially along the second rotation axis (7), a first tension member (20) being further provided, which is functionally associated with the T-shaped element (18) at its foot and with first adjustment means (21) for the rotation of the panel (4) about the first rotation axis (6), and a second tension member (25) being provided, which is functionally associated with the T-shaped element (18) at at least one end portion (26) of the head of the T-shaped element (18) and with second adjustment means (27) for the rotation of the panel (4) about the second rotation axis (7).

## Description

The present invention relates to a solar energy conversion system with solar tracker.

Solar energy conversion systems are currently known which can be of the type with photovoltaic panels or with thermal solar panels and are generally large and equipped with very complex automatic devices that are adapted to move in space the panels of the system depending on the position of the sun, so as to maximize their yield.

Such automatic devices, commonly known as solar trackers, if dedicated to large systems, allow two possible movements of the panels, such as to allow sun tracking on the part of said panels both through the day and as seasons change.

On small and medium-sized solar conversion systems, such solar trackers are very often absent, since the optimum orientation of the panels occurs approximately by moving the entire system or, during its installation, by installing it in such a position as to maximize the average energy converted during the day.

Substantially, the absence of solar trackers is due to the increase in the costs of the entire system that they would entail without providing a sufficient increase in efficiency.

The aim of the present invention is to provide a solar energy conversion system with a solar tracker, such as to allow a movement of the photovoltaic panels or of the thermal solar panels depending on the position of the sun in the sky without having to move the system.

Within this aim, an object of the present invention is to provide a solar energy conversion system which has a compact size and can be transported easily, even with small vehicles such as vans or the like.

Another object of the present invention is to provide a solar energy conversion system that is structurally simple, easy to provide, simple to assemble and at low cost.

This aim, as well as these and other objects that will become better apparent hereinafter, are achieved by a solar energy conversion system with solar tracker, comprising a lower footing, a supporting frame which is integral with said lower footing, at least one panel for accumulating solar energy which is associated with said supporting frame and movable, with respect to said supporting frame, by means of a solar tracker, about a first rotation axis and about a second rotation axis which is substantially perpendicular to said first rotation axis, respectively for the seasonal adjustment and daily adjustment of the orientation of said at least one panel with respect to the sun, **characterized in that** said solar tracker comprises:
- a T-shaped element, which is associated with said at least one panel, with the head of said T-shaped element oriented substantially parallel to said first rotation axis and with the stem of said T-shaped element oriented substantially along said second rotation axis, said T-shaped element being associated with said supporting frame,
- a first tension member, which is functionally associated with said T-shaped element at its foot and with first adjustment means for the rotation of said at least one panel about said first rotation axis,
- a second tension member, which is functionally associated with said T-shaped element at at least one end portion of said head of said T-shaped element and with second adjustment means for the rotation of said at least one panel about said second rotation axis.

Further characteristics and advantages of the present invention will become better apparent from the description of three preferred but not exclusive embodiments of a solar energy conversion system with solar tracker, according to the invention, illustrated by way of non limiting example in the accompanying drawings, wherein:

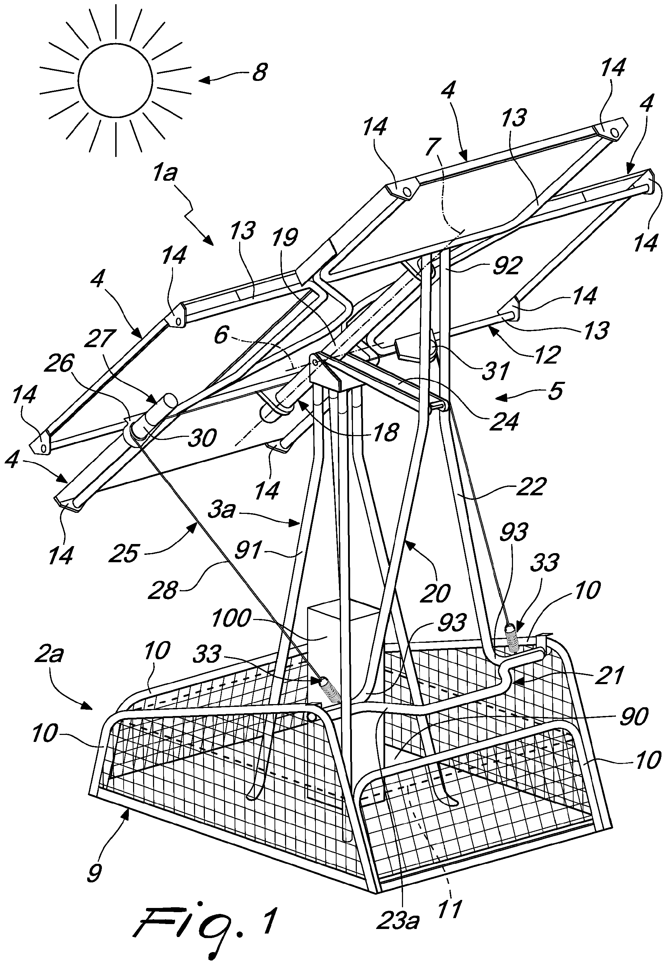

Figure 1 is a perspective view of a first embodiment of a solar energy conversion system with solar tracker, according to the invention;

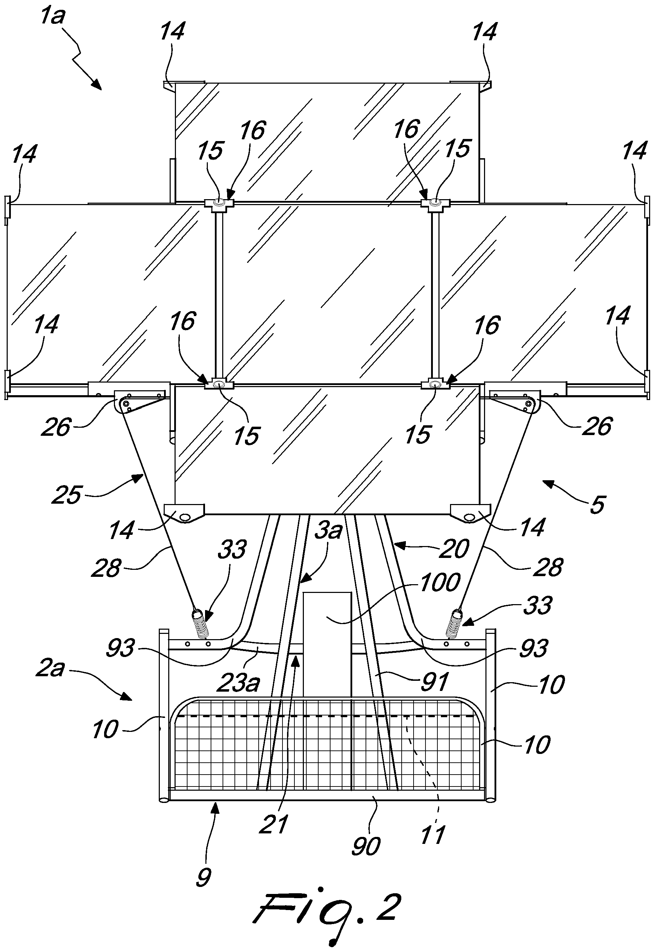

Figure 2 is a front elevation view of the system shown in Figure 1;

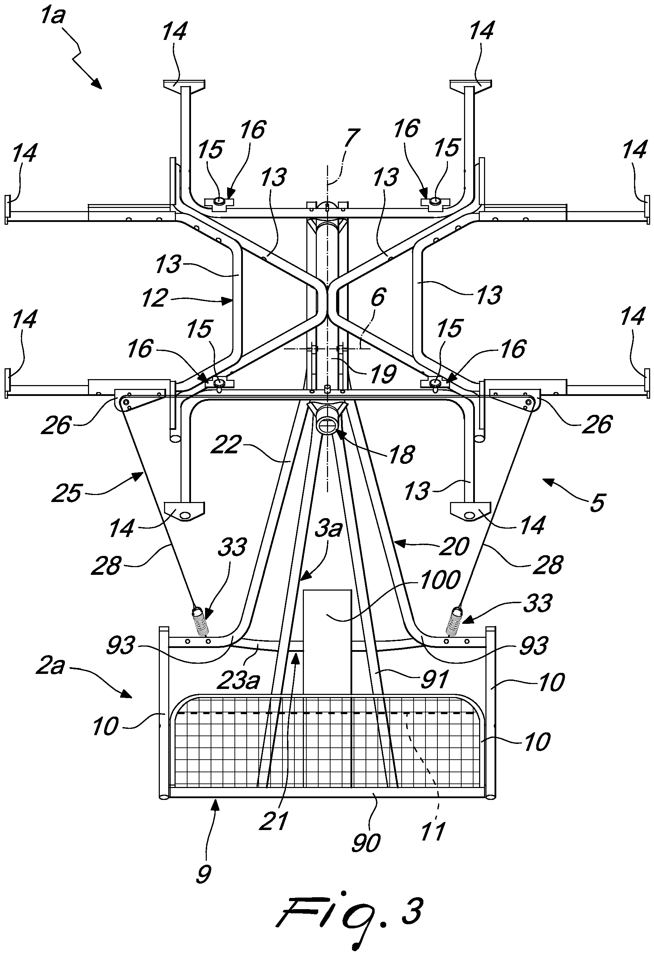

Figure 3 is a side elevation view of the system shown in Figure 1 without the solar energy accumulation panels;

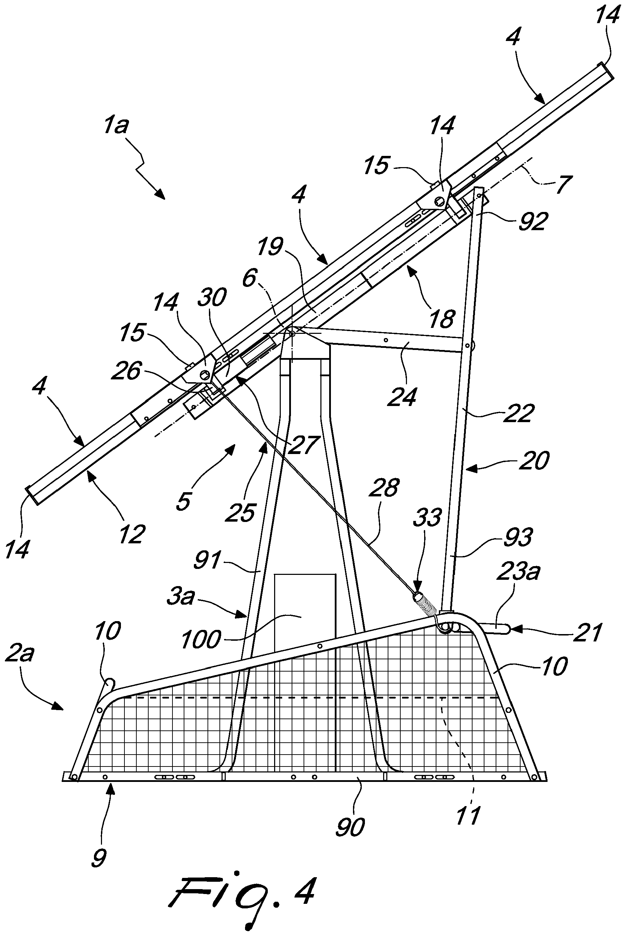

Figure 4 is a front elevation view of the system shown in Figure 1 without the solar energy accumulation panels;
Figure 5 is a perspective view of a second embodiment of a solar energy conversion system with solar tracker according to the invention;

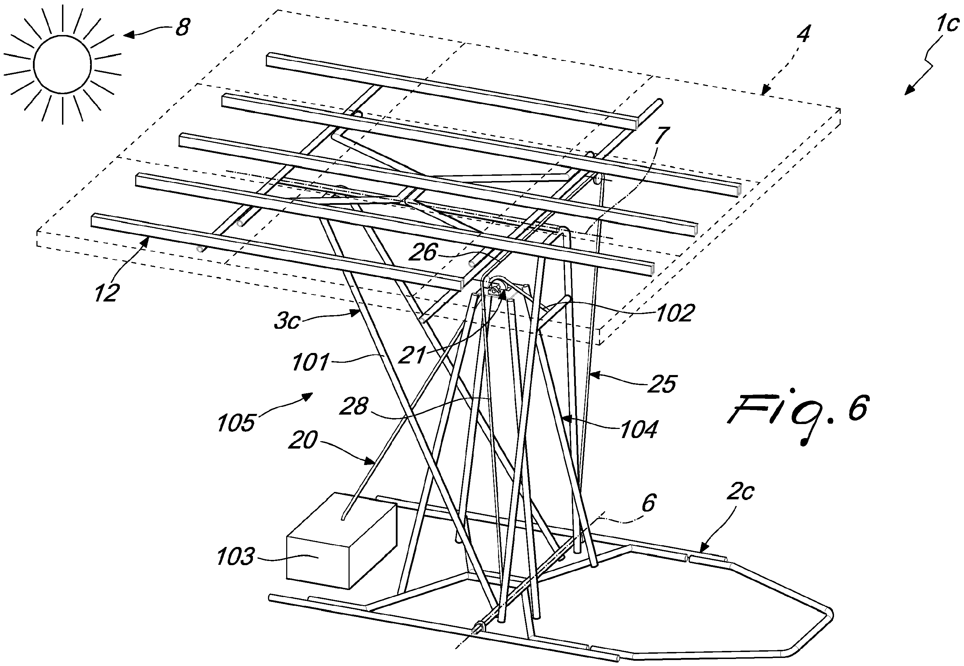

Figure 6 is a perspective view of a third embodiment of a solar energy conversion system with solar tracker, according to the invention;

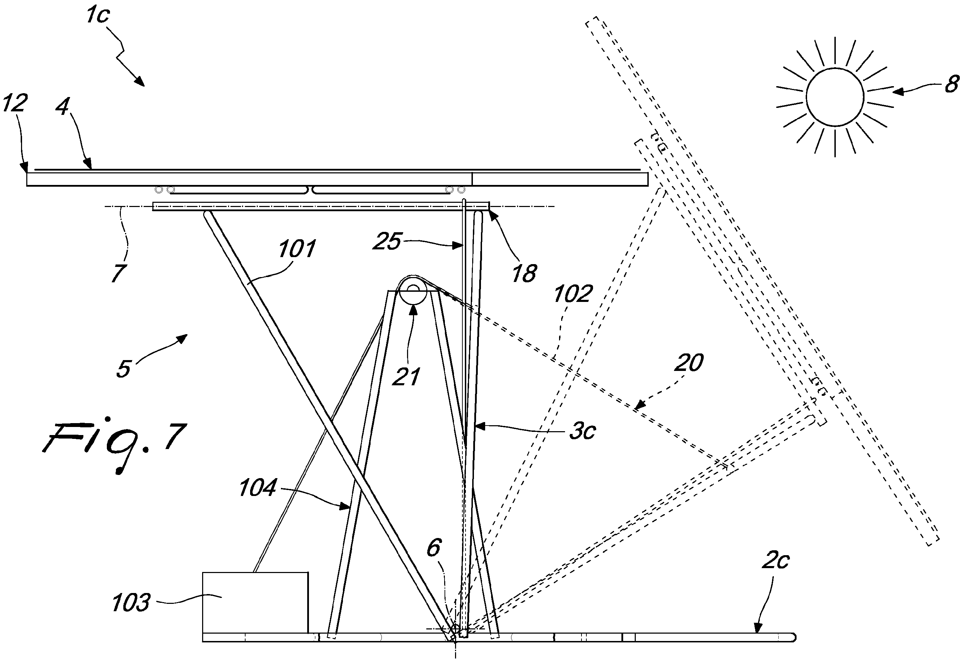

Figure 7 is a schematic side elevation view of the system shown in Figure 6;

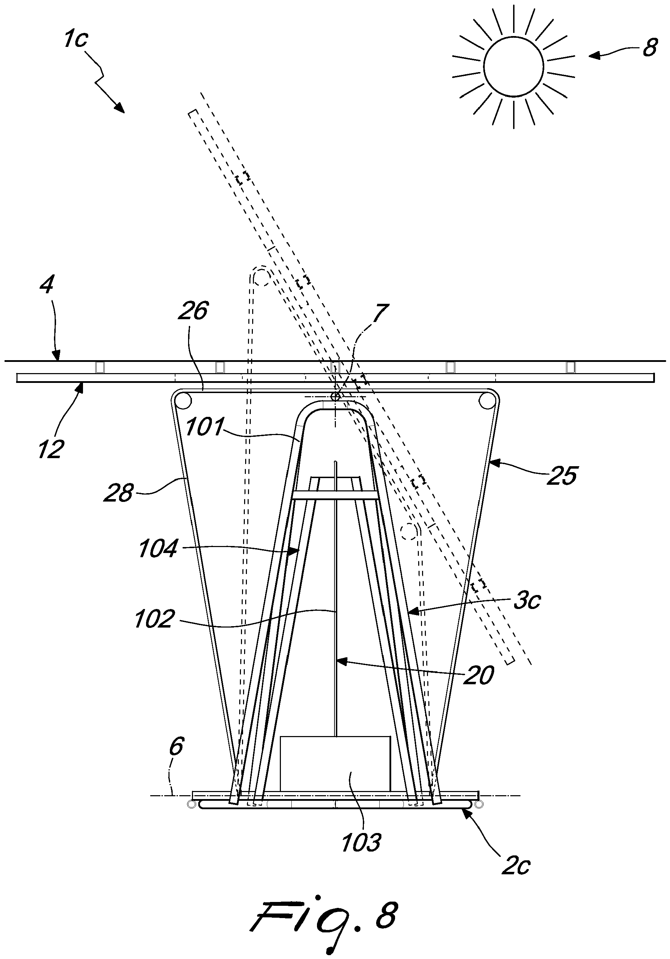

Figure 8 is a schematic front elevation view of the system shown in Figure 6.

With reference to the figures, the solar energy conversion system with solar tracker, generally designated by the reference numerals 1a, 1b and 1c in the three proposed embodiments, comprises a lower footing 2a, 2b or 2c, a supporting frame 3a, 3b or 3c which is integral with the lower footing 2a, 2b or 2c, at least one solar energy accumulation panel 4, for example of the photovoltaic type, associated with the supporting frame 3a, 3b or 3c and movable, with respect to said supporting frame 3a, 3b or 3c, by means of a solar tracker 5, about a first rotation axis 6 and about a second rotation axis 7 which is substantially perpendicular to the first rotation axis 6, respectively, for seasonal adjustment and daily adjustment of the orientation of the panel 4 with respect to the sun 8.

As will be described in greater detail hereinafter, the two systems 1a and 1b of the two first embodiments differ substantially in that the first one has a lower footing 2a of the type which can be disassembled and the second one has a lower footing 2b of the fixed type.

In the first proposed embodiment, the lower footing 2a of the system 1a in fact comprises a container body 9, which is integral with the supporting frame 3a and is composed of a supporting structure 90 to which lateral shoulders 10 can be fixed, which define laterally the volume of the container body 9 and can be filled with ballast 11, such as for example sandbags, rocks and others according to availability.

Differently, in the second proposed embodiment, the lower footing 2b of the system 1b comprises a monolithic body 120 on which the supporting frame 3b is bolted.

In all three proposed embodiments, a plurality of solar energy accumulation panels 4 is provided, which are supported by a supporting frame 12 associated with the supporting frame 3a, 3b or 3c.

More precisely, in the proposed embodiments, the supporting frame 12 is composed of a plurality of modular elements 13, which are adapted to define a resting surface on which the panels 4 are positioned and are provided with containment brackets 14 which are adapted to contain the panels 4 laterally.

As will be described in greater detail hereinafter, since the systems 1a, 1b and 1c are conceived to be used mostly in private environments and due to the current high cost of the panels 4, in order to avoid their theft, they are installed so as to be interlocked with each other and at the border regions between one panel and the next there is an antitheft system that consists of a spacer 16 which locks the panels 4 to the supporting frame 12 and can be fixed thereto by means of a screw 15 with a keyed head.

In particular, in all three proposed embodiments five panels 4 are provided which are arranged with respect to each other so as to form a cross.

As can be seen in the accompanying figures, the systems 1a and 1c differ from the system 1b also in that the supporting frames 3a and 3c of the first and third embodiments are provided by a lattice-like structure 91 or 101, the first of which is fixed and the second one pivoted to the respective lower footing 2a or 2c, differently from the supporting frame 3b, of the second embodiment, which consists of a pillar 17 which is bolted to the lower footing 2b.

According to the invention, the sun tracker 5, which is substantially the same for all three proposed embodiments, is provided by a T-shaped element 18 which is associated with the panel or panels 4, with the head of the T-shaped element 18 oriented substantially parallel to the first rotation axis 6 and with the stem of the T-shaped element 18 oriented substantially along the second rotation axis 7.

More specifically, the head of the T-shaped element 18 is defined by part of the supporting frame 12 and is connected rotatably, together with the rest of the supporting frame 12, to the stem of the T-shaped element 18 about the second rotation axis 7.

Moreover, the T-shaped element 18 is pivoted, at a central portion 19 of its stem only for the first two embodiments, to the supporting frame 3a or 3b along the first rotation axis 6.

In order to allow the rotation of the panel or panels 4 with respect to the first rotation axis 6, as will be described in greater detail hereinafter, so as to be able to perform seasonal adjustment of the systems 1a, 1b and 1c, according to the invention a first tension member 20 is provided, which is functionally associated with the T-shaped element 18 at its foot and with first adjustment means 21.

More specifically, in the first two embodiments, the first tension member 20 comprises a rigid fork 22, which is jointly associated in rotation with the foot of the T-shaped element 18, at a first end 92 thereof, and is functionally associated with the first adjustment means 21, at a second end 93 thereof, which comprise an adjustment bar 23a or 23b, which can move manually with respect to the lower footing 2a or 2b for the movement of the second end 93 of the rigid fork 22.

More specifically, in the first proposed embodiment, the adjustment bar 23a is integral with the rigid fork 22 and such fork is fixed to the lateral shoulders 10 by means of brackets, fixing them with bolts.

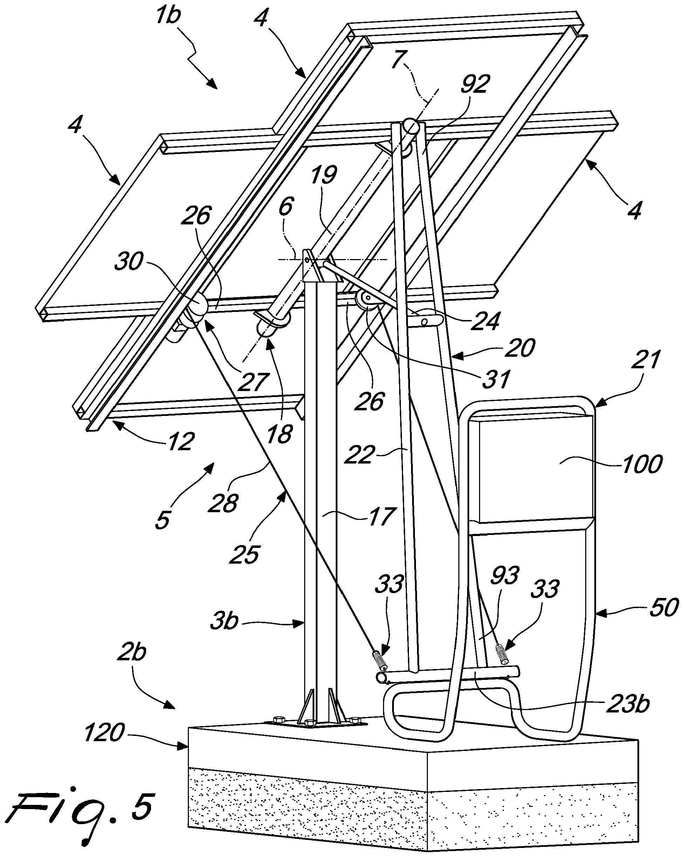

Differently, in the second proposed embodiment, the adjustment bar 23b is fixed to a stand 50, which is manually movable, as shown in Figure 5.

More precisely, in both of the first two embodiments, the rigid fork 22 and the T-shaped element 18 are jointly associated in rotation with each other by means of a strut 24, whose length can be adjusted and which is interposed between the central portion 19 of the stem of the T-shaped element 18 and the rigid fork 22.

In order to allow the rotation of the panel or panels 4 with respect to the second rotation axis 7, as will be described in greater detail hereinafter, so as to be able to perform the daily adjustment of the systems 1a, 1b and 1c, according to the invention a second tension member 25 is provided, which is functionally associated with the T-shaped element 18 at at least one end portion 26 of the head of said T-shaped element 18.

More specifically, said second tension member 25 is functionally associated with the first tension member 20, proximate to the first adjustment means 21 for the first two embodiments, and with second adjustment means 27 for the rotation of the panel or panels 4 about the second rotation axis 7.

Advantageously, in the first two embodiments, the second tension member 25 comprises a first flexible element 28, for example a cable, which is functionally connected by means of its end portions 29 to the rigid fork 22 at the second end 93 and is supported rotatably by two rotatable supports 30 and 31 which are associated with the end portions 26 of the head of the T-shaped element 18.

More precisely, the two rotatable supports 30 and 31 are provided respectively by a pulley or by a winch with manual or motorized adjustment, which defines the second adjustment means 27, and by a guiding pulley.

In this manner, the first flexible element 28 becomes substantially U-shaped, with the base of the U-shape interposed between the two rotatable supports 30 and 31 and with the arms of the U-shape interposed between the respective rotatable support 30 or 31 and the rigid fork 22.

Moreover, advantageously at least one damping element 33 is provided, which consists of an elastic element such as one or more compression springs or a damper.

Such damper 33 is interposed between the end portions of the first flexible element 28 and the second end 93 of the rigid fork 22.

As regards the third embodiment of the system 1c, the T-shaped element 18 is pivoted to the supporting frame 3c only about the second rotation axis 7, at the ends of the stem of the T-shaped element 18.

The direct pivoting of the T-shaped element 18 to the two supporting frames 1a and 1b about the first rotation axis 6, which is present in the two first embodiments, is not necessary thanks to the fact that the supporting frame 3c is pivoted to the lower footing 2c about the first rotation axis 6.

In this manner the entire supporting frame 3c is movable with respect to the lower footing 2c.

This movement is made possible thanks to the fact that the first tension member 20 comprises, in this embodiment, a second flexible element 102, for example a cable, which is functionally connected, at its end portions, respectively to a cross-member of the supporting frame 3c and to a counterweight 103 which is adapted to prevent the tipping of the system 1c in case of excessive wind.

Conveniently, in this case, the first adjustment means 21 comprise one among a pulley, a winch and a tackle with manual or motorized adjustment which is adapted to wind the second flexible element 102 so as to rotate the supporting frame 12, therefore the panel 4, about the first rotation axis 6.

More precisely, the supporting frame 3c is defined by two inverted V-shaped forks in which the vertices of said V-shapes are pivoted to the end of the stem of the T-shaped element 18 and the first adjustment means 21 are arranged on a supporting tower 104 which is arranged on the lower footing 2c, substantially, at the center thereof.

As in the first two embodiments, the second tension member 25 of the system 1c comprises a first flexible element 28, for example a cable, which is functionally connected by means of its end portions 29 to the lower footing 2c at the first rotation axis 6 and is supported rotatably by two rotatable supports which are associated with the end portions 26 of the head of the T-shaped element 18.

More precisely, the two rotatable supports are provided respectively by a pulley or a winch with manual or motorized adjustment, which defines the second adjustment means 27, and by a guiding pulley.

In this manner, the first flexible element 28 becomes substantially U-shaped, with the base of the U-shape interposed between the two rotatable supports 30 and 31 and with the arms of the U-shape interposed between the respective rotatable support 30 or 31 and the lower footing 2c.

As regards the electrical components of the systems 1a, 1b and 1c, they can be arranged in spaces provided directly in the structure of the systems 1a, 1b and 1c.

For example, the electrical panel, designated by the reference numeral 100, is accommodated, in the first embodiment, at the base of the lattice-like structure 91 and, in the second embodiment, on the stand 50.

Moreover, it should be specified that in the systems 1a, 1b and 1c described so far the elements that constitute the solar tracker 5 are shaped tubular elements that have such dimensional characteristics as to allow mutual connections to external structures and/or accessories of several kinds, by way of the use of standard fixing systems and connectors for construction scaffolding.

Operation of the systems 1a, 1b and 1c for solar energy conversion with solar tracker is as follows.

More precisely, after assembling the supporting frame 12, the panels 4 are positioned by inserting them in the central part and making them slide toward the respective position up to the stop which is constituted by the containment brackets 14 which are welded to the end of each tube.

The last panel 4 to be inserted is the central one. At this point it is sufficient to insert four spacers 16 and tighten everything with four screws 15 having a keyed head.

The supporting frame 12 of the panels 4 rotates about the second rotation axis 7, which is supported in two points by vertical elements, such as the lattice-like structure 91 or 101 or the pillar 17 and the rigid fork 22.

By lifting or lowering the rigid fork 22 with the adjustment bar 23a or 23b, for the first two embodiments, or by rotating the supporting frame 3c about the first rotation axis 6, for the third embodiment, the supporting frame 12 rotates about the first rotation axis 6 so as to adjust the orientation of the panels 4 with respect to the sun 8 as the seasons change.

Moreover, the orientation of the supporting frame 12 with respect to the rigid fork 22 is adjustable by means of the strut 24.

In this manner, a rotation of the supporting frame 12 about the first rotation axis 6 occurs which is comprised between a first substantially horizontal active position and a second active position which is inclined with respect to the first active position substantially by 60°.

The daily adjustment of the orientation of the panels 4 with respect to the sun 8 is instead obtained by means of the first flexible element 28, which by passing transversely through the supporting frame 12 and descending toward the rigid fork 22, passing through the rotatable supports 30 and 31, or the lower footing 2c, varies the length of the two lateral arms, winding around one of the rotatable supports 30 and 31 and unwinding simultaneously on the other one.

The arrangement of the first flexible element 28 is such as to minimize the length variations between the two lateral arms.

In this manner, a rotation of the supporting frame 12 about the second rotation axis 7 with respect to the first active position substantially up to 60° on both sides occurs.

In order to limit overloads of the structure caused by this kinematic imperfection between the first flexible element 28 and the strut 24, two damping elements 33 are provided.

As already mentioned, the two damping elements 33 can be provided by compression springs. This choice is due to safety reasons, since in case of great oscillations of the panels 4 due to strong wind, at the most the condition in which the turns of the spring are packed is reached.

To summarize, the second rotation axis 7, the rigid fork 22 and the first flexible element 28 constitute a right-angled triangular structure with a fixed geometry which rotates about the first rotation axis 6 which is perpendicular and passes through the second rotation axis 7.

A fixing system allows to lock the rigid fork 22 in two or more positions, so as to determine the seasonal inclination of the panels 4.

In practice it has been found that the solar energy conversion system with solar tracker according to the present invention fully achieves the intended aim and objects, since it allows to orient the photovoltaic panels as a function of the position of the sun by way of a daily movement which is motorized by means of a cable and a manual seasonal adjustment on two or more positions.

Another advantage of the system according to the present invention resides in that it is a structure that is modular and, since the system is constituted by individual elements that have a weight of less than 20 kg, can be transported easily.

The individual elements in fact can be moved safely by a single person and transported by means of even medium-size vehicles, such as for example a van.

Further advantages of the system according to the present invention reside in that it has an antitheft system for the photovoltaic panels and in that it can be equipped with instruments of different kinds, such as for example inclinometers and the like.

The solar energy conversion system with solar tracker thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements and to the state of the art.

The disclosures in Italian Patent Application No. MI2011A000241 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A solar energy conversion system (1a, 1b, 1c) with solar tracker, comprising a lower footing (2a, 2b, 2c), a supporting frame (3a, 3b, 3c) which is integral with said lower footing (2a, 2b, 2c), at least one panel (4) for accumulating solar energy which is associated with said supporting frame (3a, 3b, 3c) and movable, with respect to said supporting frame (3a, 3b, 3c), by means of a solar tracker (5), about a first rotation axis (6) and about a second rotation axis (7) which is substantially perpendicular to said first rotation axis (6), respectively for the seasonal adjustment and daily adjustment of the orientation of said at least one panel (4) with respect to the sun (8), **characterized in that** said solar tracker (5) comprises:
- a T-shaped element (18), which is associated with said at least one panel (4), with the head of said T-shaped element (18) oriented substantially parallel to said first rotation axis (6) and with the stem of said T-shaped element (18) oriented substantially along said second rotation axis (7), said T-shaped element (18) being associated with said supporting frame (3a, 3b, 3c),
- a first tension member (20), which is functionally associated with said T-shaped element (18) at its foot and with first adjustment means (21) for the rotation of said at least one panel (4) about said first rotation axis (6),
- a second tension member (25), which is functionally associated with said T-shaped element (18) at at least one end portion (26) of said head of said T-shaped element (18), and with second adjustment means (27) for the rotation of said at least one panel (4) about said second rotation axis (7).

2. The system (1a, 1b, 1c) according to claim 1, **characterized in that** it comprises a frame (12) for supporting said at least one panel (4), rotatably connected to said stem of said T-shaped element (18) about said second rotation axis (7), said head of said T-shaped element (18) being defined by said supporting frame (12) and being connected rotatably to said stem of said T-shaped element (18) about said second rotation axis (7).

3. The system (1a, 1b) according to claim 1 or 2, **characterized in that** said T-shaped element (18) is pivoted to said supporting frame (3a, 3b) along said first rotation axis (6) at a central portion (19) of said stem of said T-shaped element (18).

4. The system (1a, 1b) according to one or more of the preceding claims, **characterized in that** said second tension member (25) is functionally associated with said first tension member (20) proximate to said first adjustment means (21).

5. The system (1a, 1b) according to one or more of the preceding claims, **characterized in that** said first tension member (20) comprises a rigid fork (22), which is jointly associated for rotation with the foot of said T-shaped element (18) at a first end (92) thereof and is functionally associated with said first adjustment means (21) at a second end (93) thereof.

6. The system (1a, 1b) according to one or more of the preceding claims, **characterized in that** said first adjustment means (21) comprise an adjustment bar (23a, 23b) movable manually with respect to said lower footing (2a, 2b) for the movement of said second end (93) of said rigid fork (22).

7. The system (1a, 1b) according to one or more of the preceding claims, **characterized in that** said second tension member (25) comprises a first flexible element (28), which is functionally connected, by means of its end portions, to said rigid fork (22) at said second end (93) and is supported rotatably by two rotatable supports (30, 31), which are associated with the end portions (26) of said head of said T-shaped element (18).

8. The system (1a, 1b) according to one or more of the preceding claims, **characterized in that** it comprises at least one damping element (33), interposed between said end portions of said first flexible element (28) and said second end (93) of said rigid fork (22).

9. The system (1a, 1b) according to one or more of the preceding claims, **characterized in that** one of said rotatable supports (30) comprises a pulley which defines said second adjustment means (27), with a manual or motorized movement system.

10. The system (1a, 1b) according to one or more of the preceding claims, **characterized in that** the other one of said rotatable supports (31) is a guiding pulley.

11. The system (1c) according to one or more of claims 1 to 3, **characterized in that** said T-shaped element (18) is pivoted to said supporting frame (3c) about said second rotation axis (7) at the ends of said stem of said T-shaped element (18) and **in that** said supporting frame (3c) is pivoted to said lower footing (2c) about said first rotation axis (6).

12. The system (1c) according to claim 11, **characterized in that** said first tension member (20) comprises a second flexible element (102) which is functionally connected, at its end portions, respectively to said supporting frame (3c) and to a counterweight (103) which is adapted to prevent the tipping of said system (1c).

13. The system (1c) according to claim 12, **characterized in that** said first adjustment means (21) comprise one among a pulley, a winch and a tackle with manual or motorized adjustment adapted to wind said second flexible element (102) so as to turn said supporting frame (12) and therefore said at least one panel (4) about said first rotation axis (6), said first adjustment means (21) being arranged on a supporting tower (104) which is arranged on said lower footing (2c).

14. The system (1a, 1b, 1c) according to one or more of the preceding claims, **characterized in that** said supporting frame (12) can move, about said first rotation axis (6), between a first substantially horizontal active position and a second active position which is inclined with respect to said first active position substantially by 60°.

15. The system (1a, 1b, 1c) according to one or more of the preceding claims, **characterized in that** said supporting frame (12) can move, about said second rotation axis (7), with respect to said first active position substantially up to 60° on both sides.

16. The system (1a, 1b, 1c) according to one or more of the preceding claims, **characterized in that** it comprises a plurality of panels (4) for accumulating solar energy which are supported by said supporting frame (12).

17. The system (1a, 1b, 1c) according to one or more of the preceding claims, **characterized in that** said lower footing (2a) comprises a container body (9), which is integral with said supporting frame (3a) and is fillable with ballast (11).

18. The system (1a, 1b, 1c) according to one or more of the preceding claims, **characterized in that** said solar tracker (5) is provided by shaped tubular elements which can be interconnected with external structures and/or accessories by way of standard fixing systems and connectors for construction scaffolding.
